# EUROPEAN PATENT APPLICATION

(11) **EP 1 595 674 A2**
(43) Date of publication of application: **16.11.2005**
(21) Application number: 05380074.4
(22) Date of filing: 14.04.2005
(51) Int. Cl.: B29C 44/32

(54) **Method and apparatus to produce a foam insulation product, and product so produced**

(30) Priority: 16.04.2004 ES 200400935; 11.04.2005 ES 200500838
(71) Applicant: Zahonero Virgili, S.L., Elda, Alicante (ES)
(72) Inventor: Zahonero Virgili, Jorge Juan, 03610 Petrer - Alicante (ES)
(74) Representative: Riera Blanco, Juan Carlos

(57) **Abstract**

It discloses a procedure and device to provide a foam insulating product, based on normal or anti-static latex, which especially good use can be made of as a thermal and acoustic insulating material, and also as a waterproofing and sealant material to be positioned directly on the constructed floor, under the parquet, laminated floor, floating floor or similar material of the floor of a home or other enclosure. The manufacturing procedures consists of a succession of phases as is conventional in the foaming processes of these materials, to which a support film provision phase has been added, of plastic or aluminium material, directly positioned on canvas conveyor (1), so that the foam compound (6) is directly poured on said support film (7), and a phase to provide a flange (13), longitudinally extended throughout the entire edge of the insulating product (9) and attached thereto by sticking. The device additionally includes a support film feeder (8), together with a film tightening device (12) to avoid creases from forming there, and means of provision and sticking of said side flange. The tight bonding between the film and the latex-based foam material is produced in the vulcanization and drying phase inside the corresponding furnace (4).

## Description

### Object of the Invention

The present invention relates to a procedure and device to produce a foam insulating product and the end product obtained, providing essential novel characteristic and considerable advantages with respect to the known processes and means used for the same purposes in the current state of the art.

More in particular, the present invention proposes the development of a process to manufacture a foam product, especially based on latex foam, in the form of a flat sheet, provided on one of its sides with a lamination closely adhered to the foam base, whose sheet product is particularly indicated to be used as a thermal and acoustic insulation material for floors, laid below the parquet of a home or similar. Furthermore, the end characteristics of the product can be selected by including certain additives in the formulation which permit modifying the product parameters in accordance with the needs.

In accordance with another characteristic, it is also an object of the invention to provide a foam insulating product with increased structural resistance, and with waterproofing capacity in the field joints.

The field of application of the invention lies within the industrial sector which manufactures foam products, in particular, latex foam-based products produced.

### Background and Summary of the Invention

In general, everyone knows that a large number of homes include installations of parquet, laminated strips, floating floors, or similar on the floors. The use of these wood-based materials does not only provide improvements from an aesthetic point of view, but it is also practical, easy and quick to fit, it can be repaired when it deteriorates due to continued use, and also provides a warmer environment than with other types of floors.

Nevertheless, against the advantages obtained with the use of parquet, wood laminate, floating floors or similar, as has been mentioned briefly above, the installation of these materials is not free from other drawbacks. On the one hand, the accumulation of water occurring on the floor due to cleaning processes and/or humidity retained below the floor should be borne in mind, which frequently leads to the swelling of the parquet wood or similar and the dislocation of the different parts or laminates. Furthermore, we should also consider the fact that the insulation achieved with its use is not as good as would be liked, since, through the wood, the transmission of acoustic waves occurs which, transmitted to adjacent homes, produce annoyances in the latter. Finally, there is also an electrostatic phenomenon, more acute in periods when the ambient temperature is higher, derived from the accumulation of electricity in the material due to its low conductivity, which at the end translates into undesirable electric shocks when completely unexpected.

As a consequence of all of this, and with the aim of achieving better performance from this type of floors and to provide, in turn, a support base therefor, laminated materials are usually used which are positioned below the parquet or similar, when the latter is installed. These laminated materials usually consist of expanded polyurethane foam sheets, plastic material sheets, latex foams, aluminized cork, recovered rubber, polyurethane, etc. When the materials used do not have insulation at the suitable humidity, it is also necessary to use an additional type of insulation, such as a plastic film or similar, which is placed below the sheet material in a separate operation. All this leads too the use of abundant labour which undoubtedly has an important repercussion on construction costs.

Taking the current state of the art into consideration, the main objective proposed by the present invention is to produce a product that, having the typical properties of latex foam and produced by a process of characteristics similar to those which are typical in manufacturing this type of products, permits producing a laminated material which incorporates therein insulation characteristics without requiring additional materials, as it already includes, on one of its sides, a plastic sheet closely adhered thereto which makes it waterproof as is desired. This objective has been fully attained by the present invention, according to the procedure set down in the characterizing part of claim 4 and the final product and its use which are defined in claims 5 to 7.

In essence, the procedure of the invention is based on a compound intended to provide latex foam, correctly prepared together with the amount of air deemed necessary so that the product has, once dried, the final density desired, and to which the additives necessary for the type of application foreseen, have been added, whose compound is supplied on a plastic film, both being transported together by a canvas belt, to the treatment device where it undergoes, as is conventional, IR surface treatment, vulcanization and drying in the appropriate furnace, to produce the desired product when it comes out of the furnace, composed of the foam material whereto the plastic film is firmly adhered. The final product can be rolled up until its subsequent use.

In accordance with a characteristic of the invention, the structural resistance of the finished product can be increased by the suitable increase in the thickness of the plastic film adhered to the foam product.

According to another characteristic of the invention the finished product incorporates a flange of predetermined width, extended along its entire longitudinal side edge, which makes the joints between adjacent strips of foam insulating product watertight.

### Brief description of the drawings.

The invention has also provided the incorporation of a sheet of drawings by way of illustration, and in no case limiting, for the purposes of aiding its understanding, wherein:
- Figure 1: shows a schematic representation of a device wherein the foam insulation product proposed by the invention is made, and
- Figure 2: shows a schematic view of a portion of laminated product wherein the disclosed improvements are incorporated, said portion of laminated product being stretched out in the assembly phase.

### Description of a preferred embodiment

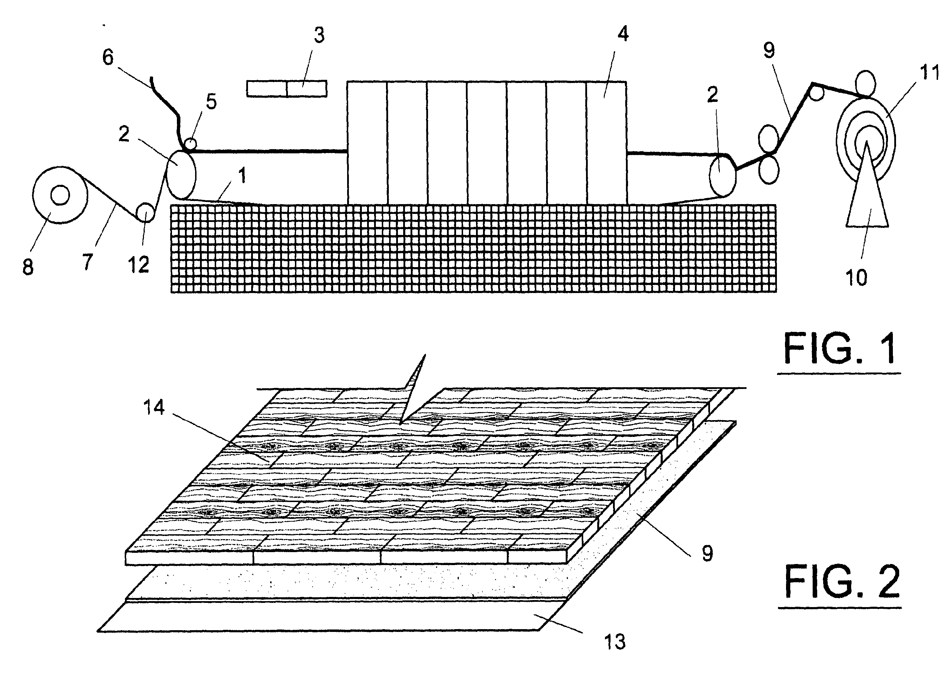

As indicated above, the detailed description of the invention will be made referring to the attached drawing, whose Figure 1 shows a representation which diagrammatically illustrates a device intended to implement the recommended procedure.

If said representation is observed, it can be seen that therein appears an installation wherein, as is typical, a canvas or similar conveyor 1 is distinguished, extended between end rollers 2, in which course it faces a infrared (IR) device 3 and traverses inside a furnace 4 of suitable characteristics. As the end of the canvas entrance 1, the placement of a device 5, which incorporates a scraping means or similar, is planned, whereby the thickness of the latex compound layer 6 which is poured on the conveyor is made uniform.

In accordance with the invention, a plastic film 7, from a roll 8 or similar, whose thickness is in the range of approximately 20 to 30 microns, is directly placed on said canvas conveyor 1, correctly tightened with the aim of avoiding the formation of creases, with the aid of a tightening device 12, so that the latex 6, when poured on the canvas conveyor, falls directly on said film 7, being transported thereon throughout the course. Initially, and after the thickness is homogenised by means of a scraping device 5 until leaving a predetermined height of the compound on the film 7, typically in the range of 1 to 10 mm (depending on the requirements of each case), is subjected to a superficial curing or drying by means of the IR device 3, and then traverses the furnace 4 where the product is vulcanized and given the final drying, as it typical. The end product 9 obtained when it comes out of the furnace 4, consists of the foam material 6 which is firmly adhered to the plastic film 7 during the vulcanization and drying operations in the furnace 4. These operations inside the furnace are performed at a temperature in the order of 150 to 170°C, but, nevertheless, the integrity of the plastic film is guaranteed thanks to the thickness of the foam compound positioned on said film, as it has a very low thermal conductivity, prevents the film from reaching temperature values which may damage it.

Finally, as can be seen in Figure 1, at the furnace 4 exit, the arrangement of a roll-up device for the formation of rolls 11 of the end product, as is conventional in the current state of the art, has been provided.

As will be understood, a finished product with the characteristics as proposed by the invention, permit the installation and assembly operations of floors to be simplified, as it already incorporates the waterproof coating (plastic film) extended on one of its entire sides. Furthermore, as was indicated at the start of the description, the possibility of selecting the characteristics of the end product, also permits the manufacturing of products with specific applications or uses, by virtue of the loads of additive incorporated in the initial composition. To that effect, you can add, for example. An additive with a determined conductor behaviour for static electric shocks, or of bactericide-type to avoid the creation of fungi and bacteria in the material, or even a basalt-based load with the aim of strengthening the thermal insulation properties and spreading of electromagnetic waves, or any other suitable type.

The end result produced therefore is a laminated product comprised of a foam base and a plastic film firmly adhered to one of its sides. The product is especially indicated to be laid on the floor surface, with the foam base in the upper position, and the parquet, laminated, floating floor or similar, lying directly on said base.

In accordance with a special characteristic of the invention, the structural resistance can be modified by providing a plastic support film 7 with a thickness adapted to the demands of each application. The tests performed have shown that the range of most appropriate thicknesses attains values between 20 and 500 microns (equivalent to a weight of 50 to 300 g/m²). This range of thicknesses is applicable both to the use of normal latex and to the use of anti-static latex.

Where appropriate, and in accordance with an alternative embodiment, the plastic support can be replaced by an aluminium support, when suitable, with a thickness so that its weight is in the range of 10 to 200 g/m².

Now referring to Figure 2, we can observe a representation of the foam insulating laminated product of the present invention, produced by the general process described above, and wherein certain structural modifications have been introduced, intended to improve the characteristics of structural resistance and watertightness of the joints in the installations wherein the finished product is used. In accordance with said representation, the finished product 9 has been provided with a flange 13 along its entire side edge. This flange 13 is, preferably, plastic material, and provides an advantageous means to form perfect seals between adjacent strips of the insulating foam material, and the consequent effect of continuity between them. For said purposes, the thickness of the flange is in the order of 5 cm, although this size is merely illustrative, since it can vary according to requirements. On the foam product 9, there appears a representation corresponding to the elements of parquet, floating floor or similar, identified with the numerical reference 14, designed to directly lie on the latex foam side of the product.

In consequence, when the foam insulating product is to be provided with said longitudinal flange 13, the manufacturing process described would incorporate an additional stage, which consists of:
f') provision of a plastic flange 13, arranged along the entire length of the product 9 coming out of the vulcanization oven 4, the joint between said flange 13 and said vulcanized product 9 being made via a sticking operation, directly on the side whereon the film 7 is incorporated.

As will be understood, with a finished product which incorporates the improvements which have just been mentioned, the practical installation of the product is simplified, at the same time as providing a more perfect finish to the floor, and also watertight and waterproof characteristics which are greatly increased.

## Claims

1. Procedure to produce a foam insulating product, particularly based on latex foam, whose procedure consists of the following stages:
a) preparation of a latex-based foam compound, combined with a quantity of air depending on the density desired for the end product, and with the additives corresponding to the properties desired for the end product;
b) pour said compound on a canvas conveyor;
c) level the compound with the aid of a scraping device or similar to make uniform the thickness of the layer of product at a height typically between 1 and 10 mm;
d) subject the product to superficial curing with the aid of an infrared device; and
e) pass the compound through a vulcanization and drying furnace, which is **characterized in that** it additionally comprises:
f) providing a support film (7) of plastic material directly deposited on the canvas conveyor (1) before pouring the foam compound (6), so that said compound directly falls on, and covers, said film.
and **in that** the cured layers d) and e) are applied to the unit formed by the base formed from the foam compound and the film, determining the tight bond between both.

2. Procedure according to claim 1, **characterized in that** it additionally comprises the stage of:
f') provision of a plastic flange (13), arranged along the entire length of the finished product (9) coming out of the vulcanization oven, the joint between said flange (13) and said vulcanized product (9) being made via a sticking operation.

3. Procedure according to claim 1, **characterized in that** the latex of stage a) can equally be normal latex or anti-static latex.

4. Procedure according to one or more of claims 1 to 3, **characterized in that** the support film (7) consists of plastic material, with a thickness in the range of 20 to 500 microns, with an equivalent weight between 50 and 300 g/m².

5. Procedure according to one or more of claims 1 to 3, **characterized in that** the support film (7) consists of an aluminium film with a thickness so that the equivalent weight is in the range of 10 to 200 g/m².

6. Procedure according to claim 4, **characterized in that** said film (7) is subjected to a stretching operation prior to being placed on the conveyor (1) with the aim of avoiding the formation of possible creases or folds therein.

7. Procedure according to claim 2, **characterized in that** the longitudinal flange (13) of plastic material is approximately 5 cm thick.

8. Device for implementing the procedure of one or more of claims 1 to 7, of the type which comprise a supply device for the latex-based foam compound (6), a levelling device (5), a device (3) for superficial curing using infrared, a vulcanization and drying furnace (4), and a conveyor element (1) extended through the IR station (3) and furnace (4) between end rollers (2), **characterized in that** it also comprises a support film (7) feeder (8) of plastic, aluminium or similar, towards the conveyor element (1).

9. Device according to claim 8, **characterized in that** it also comprises a tightening device (12) to tighten the plastic film (7) prior to positioning it on said conveyor (1).

10. Device according to claims 8 or 9, **characterized in that** it also comprises means to provide a flange (13) extended along the entire edge of the product (9) strip, bonded to said edge by sticking to the side of this support film carrier (7)

11. Product produced by the procedure of claims 1 to 7 with the use of a device according to claims 8 to 9, **characterized in that** it comprises a latex-based foam material (6) and a support film (7) perfectly tightened and firmly adhered to one of the side of said latex base.

12. Product according to claim 11, which further comprises a flange (13) extended along its longitudinal edge, whereby seals are produced between strips of adjacent product.

13. Product according to claim 10 or claim 11, **characterized in that** it has waterproof characteristics.

14. Use of the product of claims 11 to 13 as thermal and acoustic insulation, and as a waterproofing element and sealant, positioned directly under the parquet material, laminated floor, floating floor or similar of the floor of a home or other installation, lying on the constructed flooring.
